# EUROPÄISCHE PATENTSCHRIFT

(11) **EP 0 784 582 B1**
(45) Veröffentlichungstag und Bekanntmachung des Hinweises auf die Patenterteilung: **22.04.1998**
(21) Anmeldenummer: 95934609.9
(22) Anmeldetag: 30.09.1995
(51) Int. Cl.: B65D 90/00, B65D 88/12, B60J 5/10

(54) **GROSSCONTAINER**
LARGE-SIZE CONTAINER
CONTENEUR DE GRANDES DIMENSIONS

(30) Priorität: 04.10.1994 DE 4435449
(43) Veröffentlichungstag der Anmeldung: 23.07.1997
(73) Patentinhaber: MASCHINEN UND FAHRZEUG GMBH, 16272 Angermünde (DE)
(72) Erfinder: GUNTHER, Hans, D-16303 Schwedt (DE)
(74) Vertreter: Erich, Dieter
(86) Internationale Anmeldenummer: DE9501437
(87) Internationale Veröffentlichungsnummer: WO9610527

(56) Entgegenhaltungen:
- WO-A-91/10012
- CH-A- 444 040
- DE-A- 4 335 939
- DE-U- 9 406 888
- GB-A- 1 354 673
- PATENT ABSTRACTS OF JAPAN vol. 14 no. 140 (M-0950) ,16.März 1990 & JP,A,02 006280 (MASARU MIYAKE) 10.Januar 1990,

## Beschreibung

Die Erfindung betrifft einen Großcontainer für den Transport von unterschiedlichen Gütern, bestehend aus einer, eine Last aufnehmenden, rechteckigen Grundplatte, die mit jeweils zwei zueinander parallelen, langen Seiten- und kurzen Stirnflächen und einer, das Haupt des Containers bildenden, Dachfläche verbunden ist und Tore an den Wänden aufweist, die mit Seitenpfosten und Trägern, Torrahmen ausbildend, verbunden sind, wobei das Haupt mit beweglichen Abdeckmitteln versehen, einer Be- und Entladung von Gütern zugängig ist und Einrichtungen zum Bewegen des Containers auf ein Transportfahrzeug und wieder herunter vorgesehen sind.

Es ist bekannt, Container mit sich öffnenden Seitenwänden auszurüsten. Derartige Container sind in der Praxis im Einsatz und werden für den Transport von Stückgütern eingesetzt. Dazu werden die Güter über an Stirn- und Seitenwänden befindlichen Türen oder Klappen eingeladen, wobei auch Containertypen bekannt sind, bei denen sich die Seitenwände teilweise und vollständig öffnen lassen.
Container dieser Bauart sind in der DE OS 36 37 873 offenbart. Sie ermöglichen einen schnellen Zugang zur Ladefläche, wobei maschinelle Ladegeräte rationell eingesetzt werden können. Dadurch verkürzen sich die Be- und Entladezeiten beachtlich. Der Vorteil wird noch dadurch vergrößert, wenn eine vollständige Öffnung auf beiden Längsseiten durchführbar ist. Bei der in der DE OS 36 37 873 vorgeschlagenen Ausführung wird mindestens eine der beiden Seitenwandungen, die lösbar mit der Grundplatte und den Stirnwänden verbunden ist, zusammen mit der Dachfläche in Längsrichtung der Grundplatte so weit verschoben, daß eine der Seitenwände und die damit verbundene Dachfläche vollständig geöffnet werden können. Das Erhalten der Vorteile dieser Bauart macht einen großen Aufwand an Einrichtungen erforderlich. Dadurch wird die Konstruktion sehr teuer. Die zu verschiebenden Wände müssen mit Rollen über eine große Länge auf Schienen geführt, sowie über eine der Stirnwände hinaus gelagert werden. Dabei sind sie nicht platzsparend unterzubringen, da sie sich nicht in sich verkürzen.
Eine andere Lösung, Seitenwände bzw. vertikale Wände von Containern vollständig zugängig zu machen, ist in der DE OS 2659 017 angegeben. Hierbei ist eine Seitenwand zu jeweils gleichen Teilen mit zwei einflügeligen Türen verschließbar. Diese Konstruktion ist für Großcontainer nicht geeignet, da sich die Flügeltüren mit erheblichen Dimensionen figurieren und gegebenenfalls nicht zu bewegen wären. Auch das Anordnen von Falttüren bringt nicht den gedachten Effekt, da Falttüren äußerst labil sind und keine genaue Handhabung gestatten.
Dazu ist in der DE PS 39 19 349 offenbart, Seitenwände von Behältern mit mehrteiligen Falttüren auszurüsten, um damit die gesamte Seitenlänge des Containers zu öffnen. Sowohl die Anordnung von Falttüren mit senkrecht stehenden Segmenten als auch mit horizontal faltbaren Elementen gestatten keine Aufnahme von Druckkräften aus dem Innenraum. Sie sind weiterhin ungeeignet, den Innenraum hermetisch abzudichten und statische, auf den Containerkörper wirkende, Kräfte aufzunehmen und zu übertragen.
Container, insbesondere für die Beschickung mit Gütern von oben, durch das Haupt des Containers mit beweglichen, zu öffnenden Dächern auszurüsten, ist bekannt. Die DE PS 38 05 375 offenbart dazu die Ausführung einer Transportbehälterabdeckung als Faltdach, dessen Felder quer zur Transportbehälterlängsrichtung gelenkig miteinander verbunden und am Transportbehälterbordrand geführt sind. Dieses Faltdach weist mindestens zwei Felder auf, die beim Beladen des Behälters über dessen gesamte Länge geöffnet werden. Dabei werden diese Felder in Längsrichtung des Transportbehälters zusammengeschoben. Mit Vorteil kann dieser, auf der Oberseite abschließbare, Behälter richtungsunabhängig betrieben werden, ohne daß jedoch sein Aufstellen in unterschiedlichen Transportrichtungen auf dem Transportfahrzeug möglich ist. Zur Erleichterung des Öffnungs- und Schließvorganges kann das Faltdach mit einem Antrieb versehen sein. Bei bekannten Ausführungsformen des Faltdaches ist ein Endlosseilzug, mittels einer Winde betrieben, vorgesehen. Anstatt einen Seilzug zu verwenden, ist es bekannt, auch eine Antriebsspindel einzusetzen.
Es ist weiterhin beschrieben, Großcontainer an ihren Dachflächen mit einer festen Abdeckung zu versehen. Die DE OS 33 09 978 offenbart dazu eine Ausführungsform eines abnehmbaren Daches. Diese Ausführungsform eines öffenbaren Containers hat den Vorteil einer relativ genauen Abdichtung des Containerhauptes, ist jedoch auf Grund seiner Kompaktheit für Großcontainer nicht geeignet. Vorteilhaft an diesen Lösungen ist, daß die Dichtung gegen das Eindringen von schädlichen Medien wie Wasser u.ä. durch Dichtungsmulden erfolgt, in welche die Dachabdeckung mittels Indizes einrastet. Dadurch ist ein hoher Grad der Abdichtung gegeben, auch wenn durch den Fahrtwind schädliche Medien gegen die Abdeckung gedrückt werden und versuchen, in die Abdeckspalten einzudringen.

Den Lösungen des bekannten Standes der Technik haften eine Vielzahl von Nachteilen an. Die in der DE PS 33 19 349 enthaltene Lösung offenbart wohl ein ausreichendes Verschließen der Seitenwände nach Abschluß des Beladens bzw. im unbeladenen Zustand beim Beginn des Transports oder beim Abstellen des Containers, sie ermöglicht jedoch nicht, den Container für das Befüllen mit Schüttgütern einzusetzen. Auch die Lösung gemäß der DE OS 36 37 873 gestattet eine derartige Transportdurchführung nicht, da die, durch das Schüttgut verursachten, Seitendrücke die labile Konstruktion der Seitenwände verformen würde. Außerdem erhebt sich die Frage, warum Behälter für Schüttgüter mit Seitentoren ausgerüstet werden sollen. Bekannterweise werden Container dieser Verwendungsklasse ausschließlich mit Hecktüren ausgerüstet und durch Anheben an der Stirnseite ausgeleert. Es ist auch bekannt, Schüttgüter durch Öffnen des Hauptes des Containers zu entnehmen.
Die DE OS 43 939 offenbart ein gas- und flüssigkeitsfestes Türsystem für einen Frachtcontainer. Durch die dargestellten besonderen Maßnahmen zur Abdichtung der Tore wäre ein Einsatz des beschriebenen Containers für den Transport von Schüttgut durchaus gegeben. Allerdings sind der Schrift keine Hinweise über das Dichtigkeitsverhalten des Containers bei dessen dynamischer Beanspruchung während eines Transportes zu entnehmen. Zwar ist davon auszugehen, daß die Dichtheit der Tore bei einer Ausführung des Containers entsprechend dem in der Schrift gegebenen Ausführungsbeispiel durch die Durchgängigkeit einer Längswand auch bei dynamischer Beanspruchung gewährleistet ist, jedoch würden die Dichtheit und die Stabilität des Containers bei einer Anordnung von Toren in beiden Längswänden stark beeinträchtigt werden. Auf der anderen Seite ist in der Praxis, insbesondere beim Transport des Containers mit der Bahn und in wechselnden Fahrtrichtungen eine Zugänglichkeit des Innenraumes von mehreren Seiten wünschenswert.
Nun ist es, zum Erreichen eines ökonomischen Transportregimes, notwendig, zur Auslastung des Fahrzeuges und des Containers auf einer Fahrt Schüttgüter und auf der Rückfahrt Stückgüter als Fracht zu laden. Unter Betrachtung des bereits dargestellten Standes der Technik ist eine derartige Transporttechnologie nicht realisierbar, ohne jeweils angepaßte, geeignete Container zu benutzen. Hier offenbart der Stand der Technik keine Lösung, um ein Stückgut oder auch Schüttgut mit den gleichen Transportanforderungen des Erhaltes der Eigenschaften in einem Großcontainer zu bewegen. In den Fällen der Verwendung eines Behälters mit seitlichen Ladeöffnungen würde bei den aus dem Stand der Technik bekannten Lösungen ein, durch den Druck des Fahrtwindes im Bereich der Türspalten eindringendes schädliches Medium, insbesondere Schmutz und Wasser, das Ladegut in der Qualität beeinträchtigen bzw. vollständig zerstören oder die statische Stabilität des Behälters wäre in Frage gestellt.
Eine wirtschaftliche Transporttechnologie verlangt den Einsatz von Großcontainern mit universeller Beladbarkeit für einen gleichzeitigen Transport auf der Straße sowie auf der Schiene. Der Transport mit der Bahn weist besondere Spezifika auf, wobei eines der wesentlichen Merkmale dieser Transportart darin zu sehen ist, daß beim Rangieren des Trägerwaggons dessen Laufrichtung geändert und dadurch der Container aus seiner anfänglichen Vorwärtsfahrt in eine Rückwärtsfahrt bewegt wird. Dabei würde jetzt, bei einer Abdichtung für eine normale Fahrtrichtung eines Nutzkraftwagens, die Dichtwirkung aufgehoben und das schädliche Medium kann über nun offene Spalten der Seitenwände im Bereich der Tore des Hecks mit seinen Klapp- und Schwenktorausführungen sowie Öffnungen der Dachabdeckung eindringen. Diese Möglichkeit ist auch durch die, in der DE OS 33 09 978 offenbarten, Lösung nicht aufgehoben, da hier im Bereich der Einklinkstelle der Dachabdeckung nur eine einseitige Wirkung der Dichtlippe erkannt werden kann.

Der Erfindung liegt die Aufgabe zu Grunde, einen Großcontainer für den Transport von unterschiedlichen Gütern, bestehend aus einer, eine Last aufnehmenden, rechteckigen Grundplatte, jeweils zwei zueinander parallelen, die Wände des Containers bildenden langen Seiten- und kurzen Stirnflächen und einer, das Haupt des Containers bildenden Dachfläche, wobei Tore in den Wänden vorgesehen sind, welche im geschlossenen Zustand an mit Dichtungen versehenen Flächen anliegen und an Seiten- oder Mittelpfosten angelenkt sind, die gemeinsam mit Trägern einen oder mehrere Torrahmen ausbilden und wobei das Haupt, mit beweglichen Abdeckmitteln versehen, einer Be- und Entladung von Gütern zugänglich ist und am Container Einrichtungen zum Bewegen des Containers auf das Transportfahrzeug und wieder herunter vorgesehen sind, zu schaffen, der eine Beladung mit Schütt- und Stückgütern und einen Transport auf unterschiedlichen Transportmitteln sowie mit wechselnden Transportrichtungen gestattet.

Erfindungsgemäß wird die Aufgabe dadurch gelöst, daß einander benachbarte, den Innenraum des Containers umschließende Wände fugenlos aneinandergefügte Seitenpfosten, Mittelpfosten und Träger aufweisen, wobei mindestens drei Wände des Großbehälters, mit Toren ausgerüstet, vollständig zu öffnen sind. Die erfindungsgemäße Lösung sieht zusätzlich zu der bekannten Anordnung von Dichtungen an den Toren bzw. Torrahmen vor, daß wenigstens drei der umlaufenden Seitenflächen der Tore zur Aufnahme statischer und dynamischer Kräfte aus Transportbelastungen sowie des Druckes von geladenen, rölligen und schüttfähigen Gütern spielfrei und bündig an der inneren Umlauffläche des Torrahmens anliegen. Durch diese Anordnung werden die Seitenwände vollständig und hermetisch von der äußeren Umgebung abgeschlossen. Es ist jetzt verhindert, daß durch den Fahrtwind auftreffende Luftströmungen, Feuchtigkeit oder Schmutz in den Innenraum des Behälters gepreßt werden und das Ladegut benetzen und beeinträchtigen. Weiterhin wird durch die erfindungsgemäße Einordnung der Tore sichergestellt, daß die Dichtungen durch äußere Einflüsse nicht beschädigt werden, wenn die Tore geschlossen sind, wobei zudem mit der spielfreien und bündigen Anlage von wenigstens drei umlaufenden Seitenflächen der Tore im Torrahmen der für den Fachmann überraschende Effekt entsteht, daß dynamische Kräfte, die einmal bei Veränderung der Transportrichtung und zum anderen der Lage des Großcontainers an den Seitenpfosten angreifen, durch die Tore mit ihren Rahmen in der Toröffnung aufgenommen werden. Es versteht sich im Sinne der erfindungsgemäßen Lösung, daß dazu die Scharniergestalung entsprechend robust und widerstandsfähig ausgeführt wird. Durch dieses technische Merkmal, verbunden mit einer, für den Fachmann selbstverständlichen, robusten Ausführung der Tore, ist es jetzt möglich, Schüttgüter und Stückgüter zu transportieren, die vorrangig empfindlicher Natur sind und z.B. durch eindringendes Wasser zerstört werden könnten. Um einen Transport dieser Art vorzunehmen, ist das Haupt, d.h. die Deckfläche des Großcontainers, so gestaltet, daß es für eine Beladung geöffnet und für einen Transport dicht verschlossen werden kann. Die Einordnung der Tore in die Seitenwände und deren getroffene Anordnung, mit der es gestattet ist, drei senkrechte Seiten, entsprechend der Erfindung das Heck und beide Seitenflächen, vollständig zu öffnen und einer horizontalen Beladung zugängig zu machen, gestattet das Einordnen von Stückgütern mannigfaltiger Art. Die erfindungsgemäße Lösung empfiehlt sich jedoch besonders für die Aufnahme von empfindlichen, vor Witterungseinflüssen zu schützenden Gütern. Dabei ist es vorteilhaft im Sinne der Erfindung, daß die Seitentore gegen eindringende, äußere Einflüsse, zum einen durch den Rundumverschluß der Toröffnungen mit Dichtungen geschützt und zum anderen neben der jetzt, bei Beladung mit Stückgut, vernachlässigbaren Eigenschaft der Tore, statische Kräfte aufzunehmen, indem sie spielfrei und bündig in der Toröffnung angeordnet sind, die Waren durch diese spielfreie Anlage noch zusätzlich zur Wirkung der Dichtungselemente vor eindringenden, schädigenden Medien geschützt werden. Dabei versteht sich dieses vorteilhaft für das Hecktor, da hier, bei Stellung des Containers mit dem Hecktor in Fahrtrichtung voran, die Druckbelastung des Fahrtwindes dazu führt, daß der Fahrtwind Medien, wie Wasser und Staub, durch offene Fugen in den Innenraum des Behälters drücken kann. Es gehört zur erfindungsgemäßen Ausgestaltung der Lösung, daß die vorerst gewählte Möglichkeit der Öffnung des Containerhauptes durch, in bekannter Weise, bewegliche Abdeckelemente erfolgt. Auf Grund der Anwendungsmöglichkeit dieser Abdeckungsart ist ein Öffnen und Schließen der ebenen, horizontalen Fläche leicht möglich. Zur Lösung der aufgabengemäß gestellten Forderung, den Container für wechselnde Transportrichtungen, wie es z.B. beim Schienentransport üblich ist, einzusetzen, wird erfindungsgemäß eine, die offenen Spalten zwischen Containerkörper und Abdeckung verschließende, Deckfläche vertikal an die horizontalen Deckflächen angebracht. Diese vertikalen Deckflächen übergreifen den oberen Teil des Containers im Bereich seiner dort angebrachten Quer- und Langsträger und dichten nun den gesamten Container hermetisch ab. Jetzt ist die gestellte Aufgabe der Erfindung, den Container so zu gestalten, daß
1. hochempfindliche Güter
2. als Schütt- und Stückgüter ausgebildet
3. in unterschiedlichen Transportrichtungen mit mannigfaltigen Transportmitteln auf Bahn und Straße
4. mit beliebigen Ladetechnologien aufgenommen werden
   erfüllt.
Zur Realisierung des vierten Aspektes ist es vorteilhafterweise vorgesehen, an den Großcontainer Aufnahmeelemente anzuordnen, die es gestatten, ihn mittels Hakenhub, Seilzug und Kettenanschlag auf das Transportmittel zu bewegen. Die Anordnung dieser Mittel, jedes für sich, ist bekannt, die Kombination dieser Mittel an einem Container ist eine, dem Fachmann zugängliche, Maßnahme wenn die einzelnen Mittel in ihrer Ausbildung sowie Lage bekannt sind. Sie sinnvoll an einem Container verteilt anzuordnen, bringt für den Fachmann einen nicht vorsehbaren Effekt und überragt den bekannten Stand der Technik. Es ist im Sinne der Erfindung, daß vertikale Tore mit ihren Außenflächen bündig in den Torrahmen der Seitenwände eingeordnet, mit ihren Innenflächen an den Dichtungen an Rahmen anliegen, die zwischen Pfosten und Trägern bzw. Querträgern, die insgesamt das tragende Gerüst des Containers bilden, befestigt sind, wobei durch die, in den Toröffnungen eingeordneten Rahmen ausgebildete Torweite Prallplatten oder Schilde eingreifen, die lichte Weite ausfüllend, vorgesehen sind. Es ist eine Ausbildungsform der Erfindung, daß die oberen horizontalen Abschnitte der Umlaufflächen der Tore an der Innenseite der Torrahmen mit den Längsträgern bündig und spielfrei eingepaßt sind und somit eine Stabilisierung und zusätzliche Abdichtung der Tore durch diese Anordnung erreicht wird. Es ist eine weitere vorteilhafte Ausgestaltung der Erfindung, daß die Seiten- und Hecktore mit dem seitlichen, senkrechten Abschnitt ihrer Umlaufflächen an den Innenseiten der Torrahmen mit den Seiten- und Mittelpfosten des Containerrahmens bündig und spielfrei eingepaßt sind und der mittlere Türspalt zwischen den Torhälften durch das bündige Aneinanderliegen der entsprechenden Abschnitte ihrer Umlaufflächen geschlossen ist, um diesen Seitendruck der Torflügel des Tores aufzuheben und eine genaue Abdichtung im Bereich der Tore der Heck- und Seitenflächen zu erreichen, wobei die statische Wirkung der so eingepaßten Tore erzielt ist. Es ist eine vorzugsweise Ausbildung der Erfindung, daß in den Toröffnungen für die Tore der Seiten- und Heckflächen, in bekannter Art, Rahmen eingepaßt sind, auf denen umlaufend eine Dichtung angeordnet ist, die, im Bereich des Toranschlages mit den geschlossenen Toren in eine Wirkverbindung gebracht, das Eindringen von schädlichen Medien durch den Druck des Fahrtwindes verhindert. Es ist im weiteren Sinne der erfindungsgemäßen Lösung, daß die Hauptabdeckung rundum seitliche Überlappungen aufweist, so daß das Haupt mit den Flächen aller Seiten des Containers rundum spaltfrei abgedichtet ist, wobei die Überlappung an den Stirnflächen sowie an den Heckflächen bei wechselnden Transportrichtungen, den Druck des jeweiligen Fahrtwiderstandes aufnehmend, ausgebildet ist. Es ist eine weitere, vorteilhafte Ausbildung der Erfindung, daß die Hauptabdeckung, fest ausgeführt, Seitenflanken und Stirnbleche aufweist. Sie sind an der Hauptabdeckung befestigt und übergreifen das Haupt des Containers, den Bereich der oberen Längs- und Querträger überdeckend. Weiterhin ausgebildet ist die Erfindung dadurch, daß die feste Hauptabdeckung mittels Deckenplatten geteilt ausgeführt ist und in den Stoßbereichen, an denen die einzelnen Teile der Deckenplatten lösbar aneinandergefügt sind, Dichtungselemente aufweist. Die Erfindung ist sinnvoll ausgestaltet, wenn mindestens eine Deckenplatte vertikal wirkende Hubeinrichtungen aufweist, welche die Deckenplatte anhebt bzw. fest auf das Haupt preßt, wenn es geschlossen werden soll, wobei die Hubeinrichtungen vorteilhafterweise so angeordnet sind, daß eine Bewegung der restlichen Deckenplatte bzw. mehrerer Deckenplatten unter die angehobene Deckenplatte vorgenommen werden kann. In der weiteren Ausgestaltung der erfindungsgemäßen Lösung weist mindestens eine Deckenplatte Einrichtungen auf, um auf dem Containerhaupt rollend bewegt werden zu können, wobei die Erfindung weiterhin dadurch ausgebildet ist, daß die Deckenplatten wechselseitig anhebbar und verschiebbar ausgebildet und angeordnet sind. Durch die erfindungsgemäße Figuration und Ausbildung des Großcontainers ist es vorteilhafterweise möglich, im Rahmen einer Transportrunde, d. h. einer Hin- und Rückfahrt, im gleichen Container Schüttgüter bei der Hinfahrt und Stückgüter bei der Rückfahrt zu transportieren. Selbstverständlich ist diese Möglichkeit auch in anderer Reihenfolge möglich. Die erfindungsgemäße, spezifische Ausbildung des Großcontainers für den Transport von Schütt- und Stückgütern ist durch seine hermetische Geschlossenheit dafür bestimmt, insbesondere Güter zu transportieren, deren Qualität und Eigenschaften während des Transportes nicht beeinträchtigt werden dürfen. Richtungsweisende, moderne Transporttechnologien bedingen eine universelle und vielseitige Verwendung von Behältern, insbesondere Großbehältern. Da die Transportmittel unterschiedliche charakteristische Merkmale haben, ist die Aufgabe der Erfindung eine Verwendung auf verschiedenen Transportmitteln in unterschiedlichen Transportrichtungen, durch die technischen Merkmale der Erfindung erfüllt, wodurch der Vorteil entsteht, den Container nicht nur auf der Straße und damit einseitig gerichtet zu transportieren, sondern seine Verwendung auf der Bahn, auch mit Teilabschnitten, vorzusehen. Die durch die technische Ausbildung des Containers erreichten Eigenschaften lassen seine Bewegung mit wechselnden Transportrichtungen zu. Die spielfreie Einbindung der Torelemente in die Gesamtkonfiguration des Containers und die damit erreichte statische Bestimmtheit des Containersystems lassen auch eine extreme Belastung, wie das Rangieren vom Ablaufberg, zu, wobei die insgesamt spaltfreie Ausbildung der Anbindung sämtlicher Teile des Containers eine Rundumabdichtung gewährleisten.

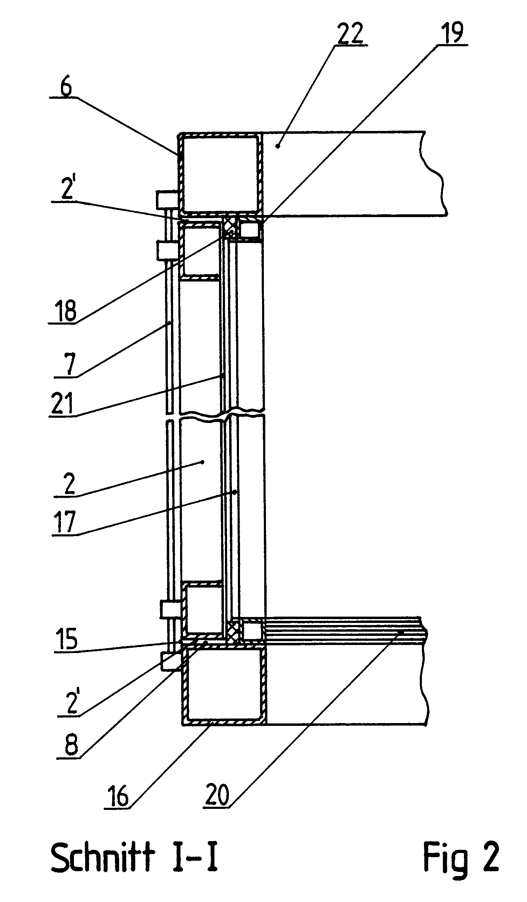

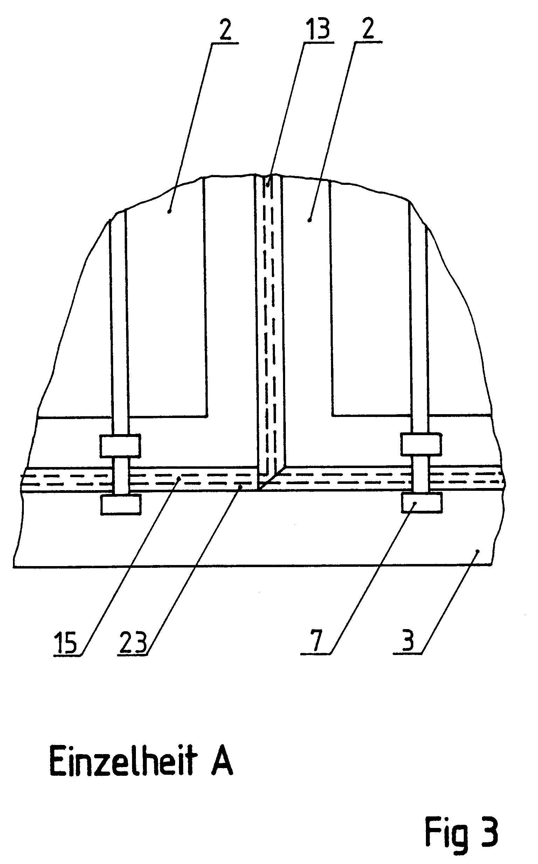

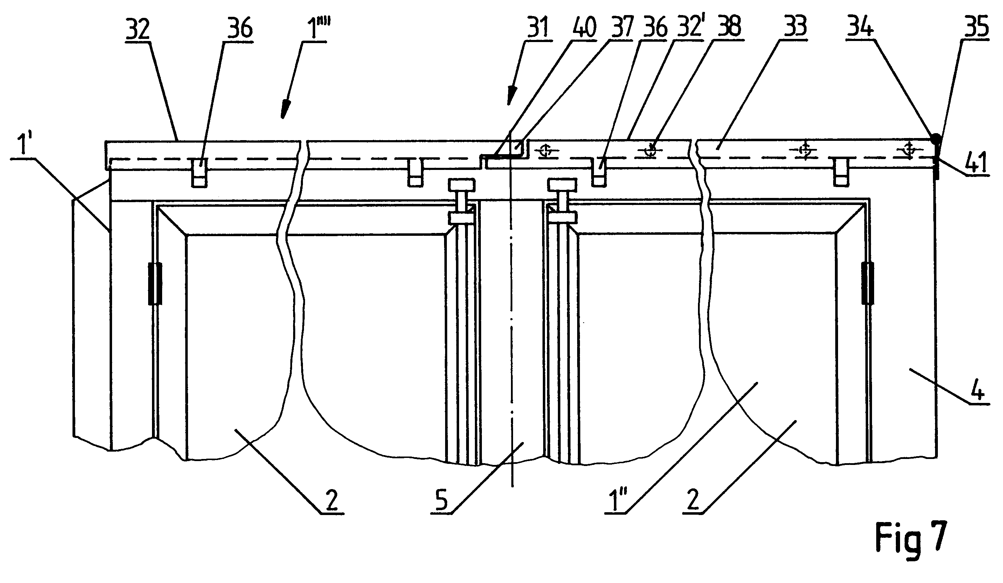

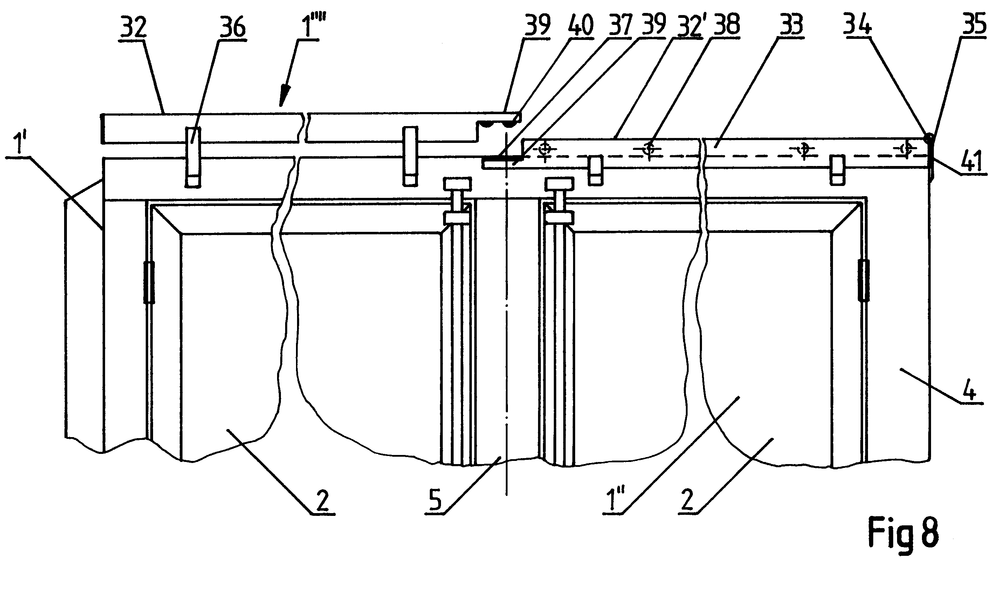

Die Erfindung soll an Hand eines Ausführungsbeispiels näher erläutert werden. In der zugehörigen Zeichnung zeigen:
- Fig.1:: den Container in einer Seitenansicht
- Fig.2:: den Schnitt I-I in Fig. 1 in vergrößertem Maßstab
- Fig.3:: die Einzelheit A in Fig. 1 und Fig. 4
- Fig.4:: die Rückansicht des Containers mit geschlossenen Hecktüren und übergezogener Faltdachausführung

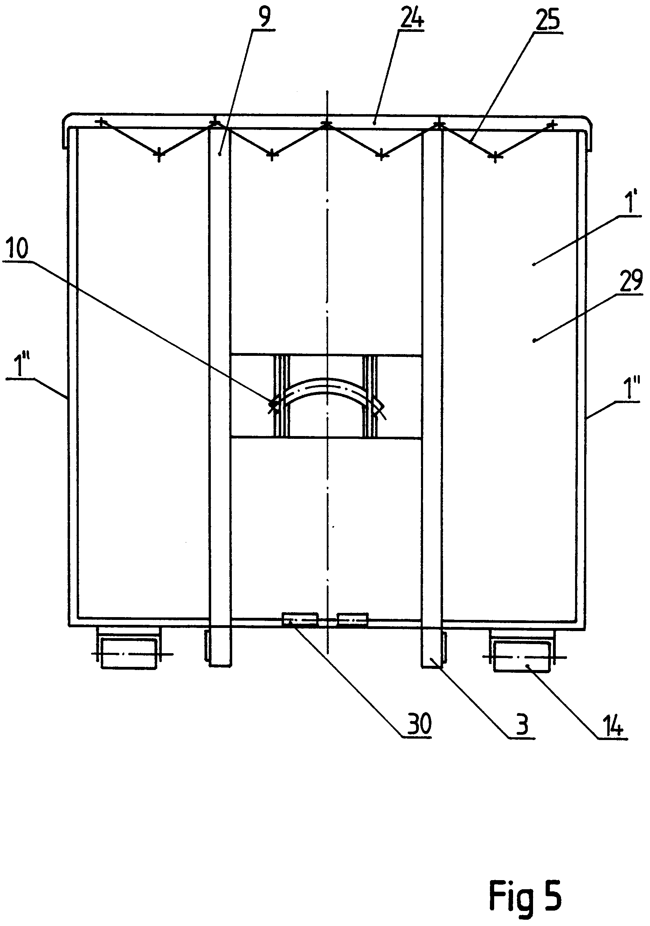

- Fig.5:: die Stirnansicht des Containers mit übergezogenem Faltdach

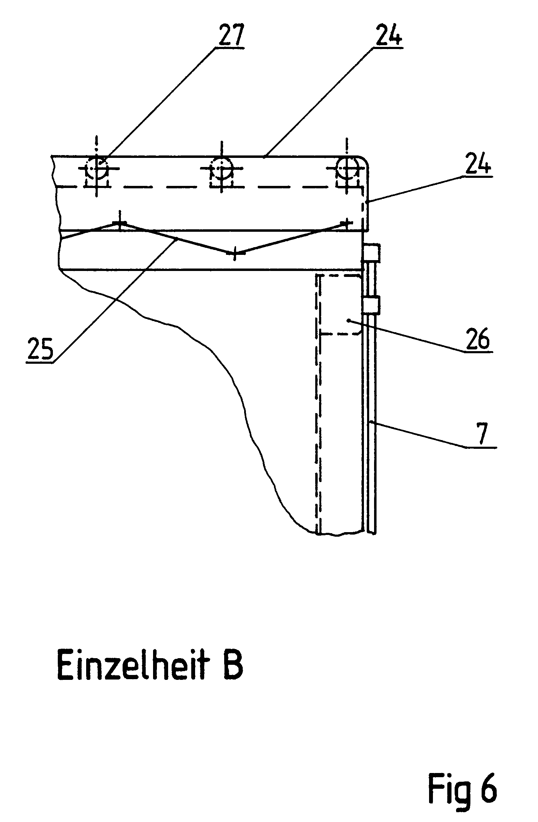

- Fig.6:: die Einzelheit B in Fig. 1
- Fig.7:: den Container mit geschlossener Hauptabdeckung in zweiteiliger Ausführung in einer schematischen Darstellung
- Fig.8:: die Ansicht nach Fig. 7 mit teilweise geöffnetem, zweiteiligem Dach in einer schematischen Darstellung

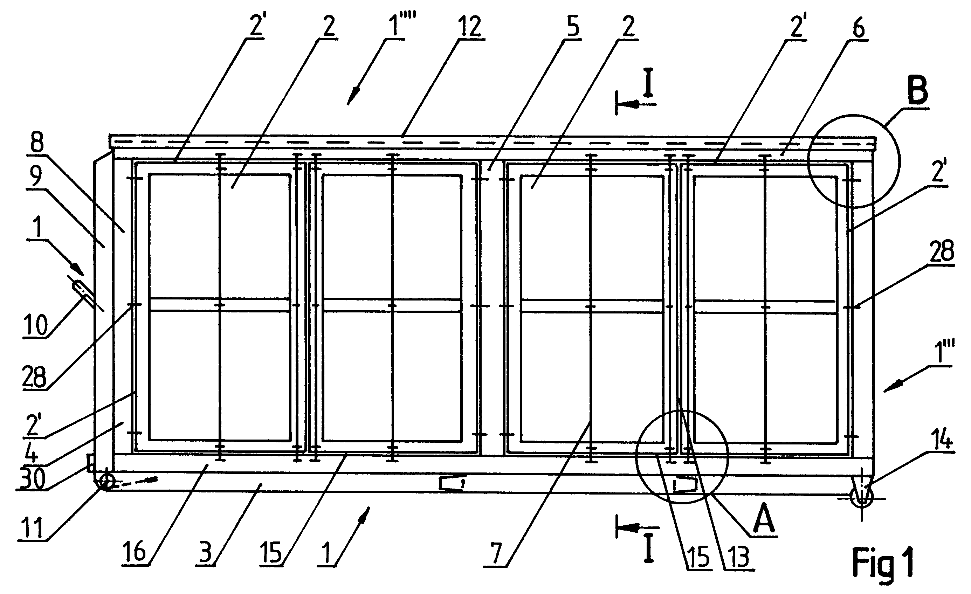

Fig. 1 zeigt den Container in einer Seitenansicht, um den Verlauf und die Anordnung wesentlicher Merkmale darstellen zu können.
Die Seitenfläche 1'' des Containers 1 läßt zwei Toröffnungen erkennen, selbstverständlich ist die nicht gezeigte, in der Tafelebene dahinterliegende Seite gleichartig ausgebildet. Der Container 1 weist eine Bodenplatte 20 auf, über die der Container 1 durch eine Stirnfläche 1', Seitenflächen 1'' sowie eine Heckfläche 1''' im wesentlichen gebildet ist. Die Bodenplatte 20 ist auf Basisträgern 3 aufgebracht und bildet damit einen stabilen, verwindungssteifen Boden. Auf den Basisträgern 3 sind an entsprechenden Holmen seitlich verlaufende Langsträger 16 angeordnet, auf welche an den Eckausbildungen und im Mittelbereich Pfosten 4; 5 aufgerichtet sind. Auf den Seiten- und Mittelpfosten 4; 5 sind, parallel mit den Längsträgern 16 verlaufend, Längsträger 6 und Querträger 22; 22' angeordnet. Durch die erläuterte Anordnung der Pfosten und der Träger ist eine verwindungssteife Konstruktion von Elementen 4; 5; 6; 16; 22; 22' gebildet worden, auf bzw. in welche die Tore 2; 26 eingepaßt sind. Die Hauptabdeckung 24 gemäß der Fig. 1 bestellt aus einer, in bekannter Weise ausgebildeten, Faltdachabdeckung mit Rollspriegeln 27. Sie ist an den Seiten-1'', Stirn- 1' und Heckflächen 1''' über die Längsträger 6 und Querträger 22; 22' gezogen und mittels elastischer Verspannungen 25 festgehalten. Die Art der Ausbildung der Überlappungen 24' der Hauptabdeckung 24 garantiert, vor allem in den Bereichen der Querträger 22; 22' der Stirnseite 29 sowie des Hecktores 26, eine Verwendung des Containers 1 zur Bewegung in zwei Fahrtrichtungen ohne Veränderung seiner Lage auf dem Transportfahrzeug so, wie es bei Bahntransporten üblich ist. Durch diese Ausbildung wird garantiert, daß durch den Druck des Fahrtwindes keine, die Ladung schädigenden Medien im Bereich des Containerhauptes 1'''' in den Innenraum gelangen können und insbesondere empfindliche Ladegüter beschädigt werden. In die, durch die Pfosten 4; 5 und Längsträger 6; 16 sowie Querträger 22; 22', gebildeten Öffnungen werden die Tore 2 und 26 eingepaßt. Es ist dem Fachmann verständlich, daß zur besseren Erläuterung die in die Seitenfläche 1'' eingebauten Tore 2 mit ihrer Konfiguration der Gesamtausbildung des Großcontainers 1 Erwähnung finden. Die Seitentore 2 werden mit beweglichen Anschlagmitteln, in diesem Falle schweren Scharnieren 28, an die Pfosten 4; 5 angeschlagen und mit den entsprechenden Abschnitten ihrer Umlaufflächen 2' bündig und spielfrei in den ausgebildeten Öffnungen angeordnet. Zur Arretierung der Seitentore 2 sind entsprechende Verschlußsperren 7, je Tor zwei Stück, angeordnet.
Die Anordnung und Ausführung der Seitentore 2 findet in der Fig. 2 nachstehend nähere Erläuterung. An dem Basisträger 3 sind im Bereich des Hecktores 26 Laufrollen 14 angeordnet. Mit der Stirnseite 29 überdeckend ist auf dem Basisträger 3 ein Anschlagmittel 11 für das Aufziehen des Containers mittels Seil auf das Transportfahrzeug angeordnet. Am unteren Ende, im Bereich der Verbindung des Holmes 9 mit dem Basisträger 3, ist ein Anschlagmittel 30 für die Verbindung zum Aufziehen des Containers 1 mittels einer Kette vorgesehen. Zwischen den Holmen 9 ist an der Stirnseite 29 des Großcontainers 1 ein Anschlagmittel 10 für das Bewegen des Containers 1 mittels Haken eingepaßt. Es ist für den Fachmann erkennbar, daß beim Einwirken von Kräften auf dieses Anschlagmittel, insbesondere von Kräften mit horizontalem Vektor, Verformungskräfte auf die Pfosten 4; 5 und Träger 6; 16 einwirken. Wenn auch diese Kräfte innerhalb des elastischen Verformungsbereiches auf die Rahmenteile wirken, so würde trotzdem eine bestimmte Labilität die Funktion des Großcontainers 1 beeinträchtigen. Zur Sicherung der Festigkeit bei der wechselnden Belastung sind, wie bereits erwähnt, insbesondere die Seitentore 2 mit ihren Umlaufflächen 2' in den Pfosten 4; 5 und Längsträgern 6; 16 spielfrei und bündig eingeordnet. Diese spielfreie Einordnung ist zur Erhöhung der Sicherheit im Bereich der Scharniere 28 und im Bereich der Innenkante des Längsträgers 6 der Torleibung vorgenommen worden. Durch die spielfreie Einordnung werden die Verformungskräfte durch die Seitentore 2 aufgenommen und durch ihre Umlaufflächen 2' in die Pfosten 4; 5 und Längsträger 6; 16 verteilt. Zur Lagefixierung der Tore 2; 26 sind unter Berücksichtigung der statischen Belastung aus der Rahmenverformung schwere, genau gängige Scharniere 28 zur Anwendung vorgesehen. Die Unterseite der Tore 2; 26 ist im Bereich der Längsträger 16 mit größerem Spiel zwischen der unteren Stirnseite des Tores 2; 26 und dem Längsträger 16 ausgebildet. Es ist eine logische Folge des konstruktiven Regimes, daß der vertikale Türspalt 13 zwischen den Hälften der Tore 2; 26 in der Schließstellung der Torflügel zur Erzeugung des spielfreien, bündigen Anliegens der Umlaufflächen 2; 2' an den Rahmenteilen 4; 5; 6 aufgehoben ist.
Fig. 2 zeigt die Ausbildung der Tore 2; 26 am Beispiel der Einordnung eines Seitentores 2. Wahlweise kann bei der Ausbildung der Hecktore 26 im Bereich des Türspaltes 13 eine überlappende Dichtung 23 angeordnet werden. Dieses ist jedoch fakultativ und für die Abdichtungswirkung nicht unbedingt wesentlich. Konzentriert auf die Ausbildung gemäß Fig. 2 als typische Ausführung der Türausbildung und ihrer funktionalen Einordnung in den Containerkörper, ist die Höhe des Containers 1 durch einen Schnitt verringert. Dadurch ist es möglich, die Funktionsteile des Seitentores 2 und die Einordnung der Dichtungs- und Schutzelemente in ihrem Zusammenhang darzustellen. Das Seitentor 2 liegt mit seinem Torblatt 21 an Dichtungen 18 an. Ein Rahmen 19 nimmt den Druck des Seitentores 2 auf, welcher in der Verschlußstellung durch Einklinken der Verschlußsperren 7 erzeugt wird. Im Bereich des Rahmens 19 ist, mit der Innenfläche des Seitentores 2, parallel mit dem Torblatt 21 verlaufend, diesem vorgesetzt, ein Schild 17 derart angeordnet, daß die Dichtung 18 vollständig geschützt ist. Die starre Verbindung des Schildes 17 mit dem Torrahmen des Seitentores 2 und dem Torblatt 21 garantiert eine verwindungssteife und knickfeste Ausbildung des Seitentores 2. Wie bereits im Zusammenhang mit Fig. 1 dargestellt, liegt die Umlauffläche 2' des Seitentores 2 spielfrei und bündig an der zugewandten Fläche des Längsträgers 6 und nicht sichtbar am Seitenpfosten 4 an. Im Bereich des Längsträgers 16 ist an der betreffenden Fläche die Umlauffläche 2' mit einem größeren Abstand vom Längsträger 16 angeordnet. Eine Bodenplatte 20, vorrangig mit einem Schichtpreßstoff belegt, gewährleistet eine sichere Lagefixierung einzubindender Stückgüter dadurch, daß die Haftreibung verbessert ist sowie Sperrmittel in die Bodenplatte 20 eingedrückt werden können. Fig. 2 zeigt nochmals präzise, daß einmal durch die konstruktiv stabile Ausführung des Seitentores 2, verbunden mit den Verschlußsperren 7, ein dichtes, lageorientiertes Einordnen der Seitentore 2 in die Toröffnungen erfolgt und ein wirkungsvolles Abdichten, einmal durch das Einfügen der Dichtungen 18 und die mindestens dreiseitige, spielfreie und bündige Einordnung der Seitentore 2 in die Flächen 1'; 1'' erreicht werden kann. Es ist jetzt möglich, Stückgüter in bekannter Weise mittels Fördergeräten durch die Seitentore 2 in den Großcontainer 1 einzubringen und sie gegen eindringende, schädliche Medien, insbesondere aus dem Druck des Fahrtwindes, zu schützen. Die Ausbildung der Hauptabdeckung 24 ist in der Folge noch zu erläutern, sollte jedoch bei der jetzigen Teilbetrachtung schon Erwähnung finden, da Schüttgüter bei geöffneter Hauptabdeckung 24 in den Container 1 eingefüllt werden können und durch die Anordnung des Schildes 17 die Abrasionskräfte der Schüttgüter von der Dichtung 18 abgehalten werden, diese vor Zerstörung schützen und außerdem die Seitendrücke des Schüttgutes aufnehmen und auf die Torelemente der Tore 2; 26 mit ihren Verschlußsperren 7 verteilen.
Um eine Einzelheit nicht unerwähnt zu lassen, ist in Fig. 3 die Ausbildung einer Spaltabdichtung 23 des Türspaltes 15 der Hecktore 26 schematisch dargestellt. Hier kann eine Dichtungseinlage als Spaltabdichtung 23 in den Türspalt 13 eingeführt werden. Die Dichtung 23 darf jedoch ein bündiges Aneinanderliegen der Umlaufflächen der Tore 2; 26 im Bereich des Spaltes 13 nicht verhindern. Die Fig. 3 zeigt deutlich die vergrößerte Breite des Türspaltes 15 zwischen den Trägern 16, 22' und den unteren Umlaufflächen 2' des Tores 2; 26.

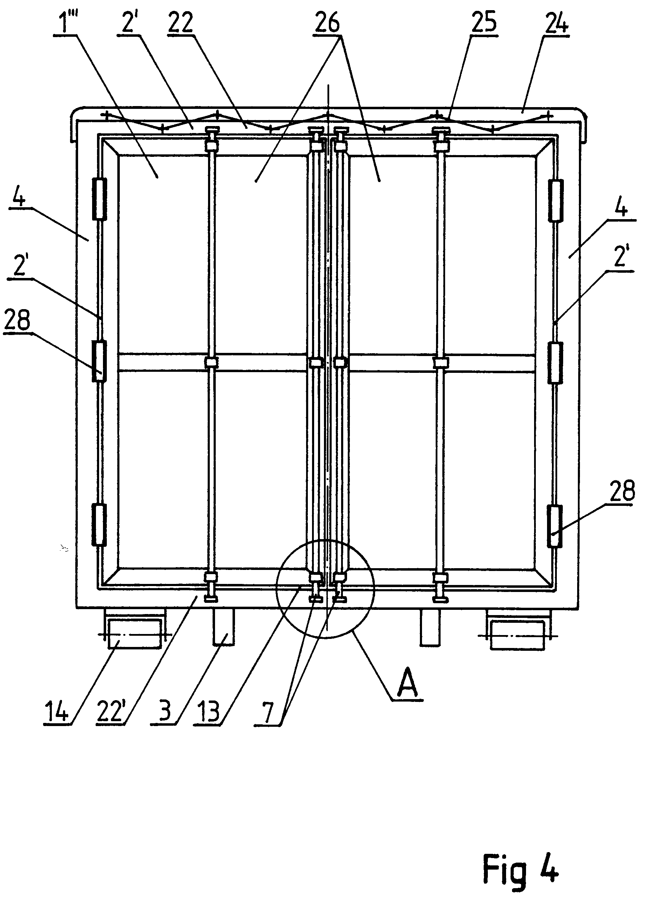

Fig. 4 zeigt die Heckfläche 1''' des Großcontainers 1. Die Toröffnungen sind durch die Seitenpfosten 4 und die Querträger 22; 22' gebildet. In diese Öffnungen sind die Hecktore 26 eingeordnet und beweglich an den Seitenpfosten 4 angeschlagen. Verschlußsperren 7 sichern bei geschlossener Lage die Tore 26. Am unteren Querträger 22', symmetrisch verteilt, sind die Basisträger 3 angeordnet. Sichtbar ist die Stellung der Laufrollen 14 an beiden Seiten der Basisträger 3 eingezeichnet. Damit kann der Großcontainer 1 auf ein Transportfahrzeug gezogen werden. Es ist selbstverständlich und im Bereich der konstruktiven Ausführung möglich, weitere Anschlag- und Bewegungsmittel vorzusehen. Die Einordnung der Hecktore 26 erfolgt in mit den Seitentoren 2 synchroner Weise. Ihr Aufbau ist den Seitentoren 2 und damit der Funktion des Abdichtungseffektes an den Umlaufflächen 2' der Tore 2 gleich. Eine Ausführungsart der Hauptabdeckung 24 des Containerhauptes 1'''', das in bekannter Art und Weise als Faltdach ausgebildet ist, weist an den Flächen 1'; 1''; 1''', im Bereich der Träger 6; 22; 22', übergreifende Überlappungen 24' auf, welche das Haupt 1'''' seitlich sowie an den Stirn- und Heckflächen 1'; 1''' gegen das Eindringen des Fahrtwindes, mit den, durch diesen transportierten, schädlichen Medien, abschottet. Eine elastische Verspannung 25, ähnlich der von Planen von LKW's, sichert eine straffe Verspannung der Hauptabdeckung 24 über Rollspriegel 27 bis in den Bereich der Träger 6; 22; 22'. Bei der Beladung über das geöffnete Haupt 1'''' des Großcontainers 1 kann die Hauptabdeckung 24 kontinuierlich in den Bereich der Stirnflächen 1' oder in den Bereich der Heckflächen 1''' geschoben werden. Es ist auch möglich, die Hauptabdeckung 24 halb zu öffnen. Durch die grundsätzliche, spaltfreie Abdichtung des Hauptes 1'''' des Containers 1 ist erstmalig die Möglichkeit geschaffen, einen Container auszubilden, der hochempfindliche Güter, als Schütt- oder Stückgüter ausgebildet, aufnehmen kann. Durch diese vorteilhafte Ausbildung ist es gestattet, in den gleichen Container wahlweise Schüttgüter und/oder Stückgüter einzuordnen. Die grundsätzlich vollständige Rundumabdichtung aller Öffnungen sowie der Türspalte 13; 15 als auch der Spalten im Bereich der Spriegel 27 im Bereich der Hauptabdeckung 1'''', durch die allflächige Überlappung 24' bis in den Bereich der Träger 6; 22; 22', gewährleistet ein vollständiges Abhalten eindringender Luft- und Medienströme.
Unter Berücksichtigung der bekannter Weise labilen Ausführung der Hauptabdeckung 24 als Faltdach sowie der auch aufwendigen Spriegelführung ist die Überlegung nahe, eine starre Abdeckung des Hauptes 1'''' des Containers 1 zu finden. Fig. 7 zeigt die Ausbildung einer zweigeteilten, beweglichen Abdeckung 31. Die Abdeckung 31 ist im Bereich des Mittelpfostens 5 geteilt und besteht aus den Deckenplattenteilen 32 , 32'. Die Deckenplatten 32; 32' weisen Seitenflanken 33 auf, welche die Längsträger 6 dichtend übergreifen. An der Stirnfläche 1' sowie an der Heckfläche 1''' sind, die Querträger 22; 22' übergreifend, Stirnbleche 35; 35' an den Deckenplattenteilen 32; 32' befestigt. Das Stirnblech 35 ist mittels Scharnier 28 an dem Deckenplattenteil 32' befestigt. An der Verbindungsstelle 37 der Deckenplattenteile 32; 32' sind Überlappungen 39; 39' mit Dichtungselementen 40 angeordnet. Das Deckenplattenteil 32' ruht auf Rollen 38 und ist horizontal bewegbar.
Das Deckenplattenteil 32 ist mittels Hubeinrichtungen 36 vertikal beweglich gestaltet. Die Hubeinrichtung 36 gestattet ein senkrechtes Anheben des Deckenplattenteiles 32 über die Höhe des Deckenplattenteiles 32', so wie in Fig. 8 dargestellt. Bei angehobener Stellung des Deckenplattenteiles 32 kann das Deckenplattenteil 32' horizontal verfahren werden, um von der Heckfläche 1''' wegbewegt, den darauf folgenden Teil des Hauptes 1'''' zu öffnen. Bei der Hubbewegung lösen sich die Dichtungselemente 40 aus den Überlappungen 39; 39' der Verbindungsstelle 37. Zur Arretierung des beweglichen Stirnbleches 35 kann eine Arretierung 41 an der Heckfläche 1''' angeordnet werden.

### Bezugszeichenliste

- 1: Großcontainer
- 1': Stirnfläche
- 1'': Seitenfläche
- 1''': Heckfläche
- 1'''': Hauptfläche
- 2: Seitentore
- 2': Stirnflächen
- 3: Basisträger
- 4: Seitenpfosten
- 5: Mittelpfosten
- 6; 16: Längsträger
- 7: Verschlußsperren
- 8: Torrahmen
- 9: Holm
- 10; 11; 30: Anschlagmittel
- 12: Hauptabdeckung
- 13; 15: Türspalt
- 14: Laufrolle
- 17: Schild
- 18: Dichtung
- 19: Rahmen
- 20: Bodenplatte
- 21: Torblatt
- 22; 22': Querträger
- 23: Spaltabdichtung
- 24: Hauptabdeckung
- 24': Überlappung
- 25: Verspannung
- 26: Hecktor
- 27: Rollspriegel
- 28: Scharnier
- 29: Stirnseife
- 31: Abdeckung
- 32; 32': Deckenplattenteile
- 33: Seitenflanken
- 34: Gelenk
- 35; 35': Stirnblech
- 36: Hubeinrichtung
- 37: Verbindungsstelle
- 38: Rollen
- 39; 39': Überlappung
- 40: Dichtungselemente
- 41: Arretierung

## Patentansprüche

1. Großcontainer für den Transport von unterschiedlichen Gütern, bestehend aus einer, eine Last aufnehmenden, rechteckigen Grundplatte, jeweils zwei zueinander parallelen, die Wände des Containers bildenden langen Seiten- und kurzen Stirnflächen und einer, das Haupt des Containers bildenden Dachfläche, wobei Tore in den Wänden vorgesehen sind, welche im geschlossenen Zustand an mit Dichtungen versehenen Flächen anliegen und an Seiten- oder Mittelpfosten angelenkt sind, die gemeinsam mit Trägern einen oder mehrere Torrahmen in den Wänden ausbilden und wobei das Haupt, mit beweglichen Abdeckmitteln versehen, einer Be- und Entladung von Gütern zugänglich ist und am Container Einrichtungen zum Bewegen des Containers auf das Transportfahrzeug und wieder herunter vorgesehen sind, **gekennzeichnet dadurch, daß** einander benachbarte, den Innenraum des Containers umschließende Wände (1'; 1''; 1''') fugenlos aneinandergefügte Seitenpfosten (4), Mittelpfosten (5) und Träger (6; 16; 22; 22') aufweisen, wobei mindestens drei vollständig zu öffnende Wände (1'; 1''; 1''') mit Toren (2; 26) ausgerüstet sind und im geschlossenen Zustand der Tore (2; 26) wenigstens drei ihrer umlaufenden Seitenflächen (2') zur Aufnahme statischer und dynamischer Kräfte aus Transportbelastungen sowie des Druckes von geladenen, rölligen und schüttfähigen Gütern spielfrei und bündig an der inneren Umlauffläche des Torrahmens (8) anliegen und das Haupt (1'''') des Containers (1) zum Öffnen und Verschließen mit bewegbaren Deckflächen versehen ist, welche bewegbare, die vertikalen Seiten nach unten übergreifende, Elemente aufweisen, um den oberen Teil des Containers (1) vor dein Eindringen von Medien von außen abzudichten.

2. Container nach Anspruch 1, **gekennzeichnet dadurch, daß** die Tore mit ihren Außenflächen bündig in den Torrahmen der Containerwände eingeordnet sind, mit ihren Innenflächen mittels Dichtungen (18) an Rahmen (19) anliegen, die zwischen den Pfosten (4; 5) und Trägern (6; 16) bzw. Querträgern (22; 22') befestigt sind, wobei in die, durch den Rahmen (19) gebildete, lichte Torweite eine Bodenplatte (20) eingreift.

3. Container nach den Ansprüchen 1 und 2, **gekennzeichnet dadurch, daß** die Tore (2; 26) mit dem oberen, horizontalen Abschnitt ihrer Umlaufflächen (2') an der Innenseite der Torrahmen mit dem Längsträger (6) bündig und spielfrei eingepaßt sind und eine Abdichtung der Tore (2; 26) sowie eine Stabilisierung des Containers insgesamt erzielt ist.

4. Container nach den Ansprüchen 1 und 2, **dadurch gekennzeichnet, daß** die Tore (2; 26) mit dem seitlichen, senkrechten Abschnitt ihrer Umlaufflächen (2') an den Innenseiten der Torrahmen mit den Seitenpfosten (4) sowie den Mittelpfosten (5) bündig und spielfrei eingepaßt sind und der zwischen zwei Toren (2; 26) gebildete mittlere Türspalt (13) durch das bündige Aneinanderliegen der entsprechenden senkrechten Abschnitte ihrer Umlaufflächen (2') geschlossen ist, um den Seitendruck der Flügel des Tores (2; 26) aufzuheben sowie eine genaue Abdichtung im mittleren Bereich der Torspalten zu erreichen, wobei die statische Wirkung der so eingepaßten Tore in Zusammenhang mit dem gesamten Container zu erhalten ist.

5. Container nach den Ansprüchen 1 und 2, **gekennzeichnet dadurch, daß** in der Türöffnung für die Tore (2; 26) in bekannter Art Rahmen (19) eingepaßt sind, auf denen umlaufend eine Dichtung (18) angeordnet ist, die im Bereich des Toranschlages mit den Innenseiten der geschlossenen Tore (2; 26) in eine Wirkverbindung gebracht, das Eindringen von schädlichen Medien durch den Druck des Fahrtwindes verhindert.

6. Container nach Anspruch 1, **gekennzeichnet dadurch, daß** die Hauptadeckung (24) rundum seitliche Überlappungen (24') aufweist, so daß das Haupt (1'''') mit den Flächen (1'; 1''; 1''') aller Seiten des Containers (1) rundum verbunden, spaltfrei abgedichtet ist, wobei die Überlappung an der Stirnfläche (1') sowie an der Heckfläche (1''') bei wechselnden Transportrichtungen den Druck des jeweiligen Fahrtwiderstandes aufnehmend ausgestaltet ist.

7. Container nach den Ansprüchen 1 bis 6, **gekennzeichnet dadurch, daß** die Hauptabdeckung (24) fest ausgeführt ist und Stirnbleche (35; 35') sowie Seitenflanken (33) aufweist, mit denen die Hauptabdeckung (24), das Haupt (1'''') des Containers (1) in den Bereich der Träger (6; 22; 22') diese rundum übergreifend, aufliegt.

8. Container nach Anspruch 7, **gekennzeichnet dadurch, daß** die Hauptadeckung (24) mittels Deckenplatten (32; 32') geteilt ausgeführt ist und in Stoßbereich (37) der Teile Dichtungen (40) aufweist.

9. Container nach den Ansprüchen 7 und 8, **gekennzeichnet dadurch, daß** mindestens eine Deckenplatte (32; 32') vertikal wirkende Hubeinrichtungen (36) aufweist.

10. Container nach den Ansprüchen 7 und 8, **gekennzeichnet dadurch, daß** mindestens eine Deckenplatte (32; 32') Rolleinrichtungen (38) aufweist.

11. Container nach den Ansprüchen 7 bis 10, **dadurch gekennzeichnet, daß** die Deckenplatten (32; 32') wechselseitig anhebbar und gegeneinander verschiebbar sind.

12. Container nach Anspruch 1, **gekennzeichnet dadurch, daß** Anschlagmittel (10; 11; 30) zum Positionieren des Containers (1) auf einen Transportfahrzeug für seine Einbindung und Verwendung bei unterschiedlichen Aufnahmetechnologien an der Stirnseite sowie an den Basisträgern (3) vorgesehen sind und in bekannter Art sowohl für eine Anbindung an ein Translift- Kettengerät (30), ein Hakengerät (10) als auch an einen Seilzugmechanismus (11) in eine Wirkverbindung zu versetzen sind.

## Claims

1. Large-sized container for the transportation of various goods, consisting of a load-bearing rectangular base plate, of two each parallel running long side faces and short front faces which form the walls of the container
as well as of one ceiling face being the top of the container, provided with gates in the walls which fit tightly when closed to surfaces equipped with sealings and which are hinged to side posts or center posts forming together with beams one or several gate frames within those walls, and having a top equipped with movable covering devices making it accessible to load and unload goods, and having such equipment installed on the container required to move the container up on and down from the transportation vehicle, **characterized thereby that** adjacent walls (1'; 1''; 1''') enclosing the interior of the container have jointless assembled side posts (4), center posts (5) and beams (6; 16; 22; 22'), while at least three completely opening walls (1'; 1''; 1''') are equipped with gates (2; 26), and that when the gates (2; 26) are closed at least three of their outer side faces (2') fit free from play and flush to the interior surface of the gate frame (8) in order to absorb static and dynamic forces caused by loads to be transported as well as the pressure by loose and dumpable goods loaded, and that the top (1'''') of the container (1) is equipped with movable cover plates for the purpose to open and close it which have movable elements with socket-type vertical sides to seal the upper part of the container (1) against penetration of exterior media.

2. Container according to Claim 1 **characterized thereby that** the exterior surfaces of the gates are flush with the gate frames of the container walls and that their interior surfaces fit tightly by means of sealings (18) to the frames (19) which are fastened between posts (4; 5) and beams (6; 16) or crossbars (22; 22') having a bottom plate (20) catching into the clear gate width formed by the frame (19).

3. Container according to the Claims 1 and 2 **characterized thereby that** the gates (2; 26) with the upper horizontal part of their outer side faces (2') are fitted flush and free from play to the inside of the gate frames with the frame side beam (6) and that a sealing of the gates (2; 26) as well as a stabilization of the container in general is achieved.

4. Container according to the Claims 1 and 2 **characterized thereby that** the gates (2; 26) with the lateral vertical part of their outer side faces (2') are fitted flush and free from play to the insides of the gate frames with the side posts (4) as well as the center posts (5), and that the center door gap (13) formed between two gates (2; 26) is closed by flush fitting of the respective vertical segments of their outer side faces (2') in order to neutralize the lateral pressure of the wings of the gate (2; 26) and to obtain a precise sealing in the center area of the gate gaps while the static effect of the gates fitted in that way in conjunction with the entire container is to be kept.

5. Container according to the Claims 1 and 2 **characterized thereby that** into the door openings for the gates (2; 26) frames (19) are fitted in the well-known manner and that these frames are equipped with a peripheral sealing (18) that when brought in contact with the insides of the closed gates (2; 26) prevents the penetration of harmful media by the pressure of head wind in the area of the gate catch.

6. Container according to Claim 1 **characterized thereby that** the top covering (24) is equipped all around with lateral overlappings (24') thus connecting the top (1'''') all around with the surfaces (1'; 1''; 1''') of all sides of the container (1) and sealing it without any gaps, while the overlappings on the front face (1') as well as on the rear face (1''') are designed to absorb the pressure of the respective head resistance in case of alternating directions during transportation.

7. Container according to the Claims 1 through 6 **characterized thereby that** the top covering (24) is permanently affixed having faceplates (35; 35') as well as side flanks (33) by means of which the main covering (24) rests on the top (1'''') of the container (1) in the area of the beams (6; 22; 22') while overlapping them completely.

8. Container according to Claim 7 **characterized thereby that** the top covering (24) is divided by means of cover plates (32; 32') and that it is equipped with sealings (40) on the connecting surfaces (37) of those parts.

9. Container according to the Claims 7 and 8 **characterized thereby that** at least one cover plate (32; 32') is equipped with vertical-acting lifting devices (36).

10. Container according to the Claims 7 and 8 **characterized thereby that** at least one cover plate (32; 32') is equipped with rollers (38).

11. Container according to the Claims 7 through 10 **characterized thereby that** the cover plates (32; 32') are alternately liftable and slideable against each other.

12. Container according to Claim 1 **characterized thereby that** lifting tackles (10; 11; 30) for the purpose to position the container (1) on a transportation vehicle and to include and use it under different lifting technologies are provided which are situated on the front side as well as on the base beams (3) and which can be used in the well-known manner either in connection with a translift chain hoist (30), a hook device (10) or a cable-operated mechanism (11).

## Revendications

1. Conteneur de grande capacité pour le transport de différentes marchandises, constitué d'un plateau de base rectangulaire recevant la charge, de deux surfaces latérales longues et de deux surfaces frontales courtes, chacune parallèle à l'autre et formant les cloisons du conteneur, et d'une surface de couverture formant le sommet du conteneur, des portes étant prévues dans les cloisons, lesdites portes étant en état fermé ajustées contre des surfaces pourvues de joints et étant articulées sur des montants médians ou latéraux formant avec des dormants un ou plusieurs châssis dans les cloisons, le sommet pourvu de couvertures amovibles étant accessible pour le chargement et le déchargement des marchandises, des dispositifs d'embarquement du conteneur sur le véhicule de transport et de débarquement étant prévus, **caractérisé en ce que** les cloisons (1'; 1''; 1''') contiguës et entourant l'espace intérieur du conteneur présentent des montants latéraux (4), médians (5) et des dormants (6; 16; 22; 22') disposés sans jointures les uns contre les autres, trois cloisons (1'; 1''; 1''') au moins pouvant être entièrement ouvertes étant munies de portes (2; 26) et en ce qu'en état fermé desdites portes (2; 26) trois au moins de leurs surfaces latérales (2') enveloppantes subissant les forces statiques et dynamiques dues aux charges de transport et la pression des marchandises embarquées, susceptibles de rouler et de basculer, sont ajustées sans jeu et à fleur de surface enveloppante intérieure du châssis de porte (8), le sommet (1'''') du conteneur (1) étant pourvu de surfaces de couverture amovibles pour ouverture et fermeture, lesquelles présentent des éléments mobiles dépassant des faces verticales disposées en-dessous afin de rendre la partie supérieure du conteneur (1) étanche à la pénétration de milieux extérieurs.

2. Conteneur suivant revendication 1, **caractérisé en ce que** les portes et leurs surfaces extérieures sont disposées à fleur de châssis dans les cloisons de conteneur, leurs surfaces intérieures étant ajustées au moyen de joints (18) contre les châssis (19) fixés entre les montants (4; 5) et les dormants (6; 16) ou entretoises transversales (22; 22'), un plateau de fond (20) s'engageant dans l'ouverture de passage formée par le châssis (19).

3. Conteneur suivant revendications 1 et 2, **caractérisé en ce que** les portes (2; 26) et le segment supérieur horizontal de leurs surfaces enveloppantes (2') sont enchâssés contre la face intérieure des châssis sans jeu et à fleur de l'entretoise transversale (6) et que sont ainsi obtenues une étanchéité des portes (2; 26) ainsi qu'une stabilisation du conteneur.

4. Conteneur suivant revendications 1 et 2, **caractérisé en ce que** les portes (2; 26) et le segment latéral vertical de leurs surfaces enveloppantes (2') sont enchâssés contre la face intérieure des châssis sans jeu et à fleur des montants latéraux (4) et des montants médians (5), et que le jeu intermédiaire dormant-vantail (13) formé entre deux portes (2; 26) est fermé par l'ajustement affleurant des segments verticaux respectifs de leurs surfaces enveloppantes (2'), afin de compenser la pression latérale des vantaux de porte (2; 26) et pour obtenir une étanchéité parfaite dans la zone intermédiaire de jeu dormantvantail, l'effet statique par rapport à l'ensemble du conteneur des portes ainsi enchâssées devant être conservé.

5. Conteneur suivant revendications 1 et 2, **caractérisé en ce que** des châssis (19) sont encastrés d'une manière connue dans les ouvertures de porte (2; 26), sur lesquels est disposé un joint (18) périphérique agissant de concert avec les faces intérieures des portes fermées (2; 26) dans la zone de butée de porte pour empêcher la pénétration de milieux nocifs par la pression du vent relatif.

6. Conteneur suivant revendication 1, **caractérisé en ce que** la couverture de sommet (24) présente sur toute sa circonférence des recouvrements latéraux (24'), de sorte que le sommet (1'''') raccordé sur toute sa circonférence aux surfaces (1'; 1''; 1''') de tous les côtés du conteneur (1) est rendu étanche sans présenter de joint, le recouvrement de la surface frontale (1') et celui de la surface arrière (1''') étant formés pour subir les pressions respectives de résistance à l'avancement dans des directions de transport variables.

7. Conteneur suivant revendications 1 à 6, **caractérisé en ce que** la couverture de sommet (24) est fixe et qu'elle présente des tôles frontales (35; 35') ainsi que des flancs latéraux (33), avec lesquels la couverture (24) repose sur le sommet (1'''')du conteneur (1) dans la zone des dormants (6; 22; 22') en dépassant ceux-ci sur toute la circonférence.

8. Conteneur suivant revendication 7, **caractérisé en ce que** la couverture de sommet (24) est partagée au moyen de plaques de couverture (32; 32') et qu'elle présente des joints (40) dans la zone de jointure (37) des pièces.

9. Conteneur suivant revendications 7 et 8, **caractérisé en ce qu**'une plaque de couverture (32; 32') au moins présente des dispositifs de levée (36) agissant verticalement.

10. Conteneur suivant revendications 7 et 8, **caractérisé en ce qu**'une plaque de couverture (32; 32') au moins présente des dispositifs de roulement (38).

11. Conteneur suivant revendications 7 à 10, **caractérisé en ce que** les plaques de couverture (32; 32') sont alternativement relevables et coulissantes l'une contre l'autre.

12. Conteneur suivant revendication 1, **caractérisé en ce que** des dispositifs d'accrochage (10; 11; 30) sont prévus sur la face frontale et sur les dormants de base (3) pour le positionnement du conteneur (1) sur un véhicule de transport en vue de son emboîtement et de son utilisation avec différentes techniques de mise en place, et que ces dispositifs peuvent être placés de manière connue tant pour le raccordement à une chaîne de levage (30), un appareillage à crochet (10) que pour une action associée avec un mécanisme de traction par câble (11).
